Europäisches Patentamt

European Patent Office

Office européen des brevets

(19)

(11) Publication number: **0 193 391**
A2

(12) **EUROPEAN PATENT APPLICATION**

(21) Application number: 86301368.6

(22) Date of filing: 26.02.86

(51) Int. Cl.⁴: **E 06 B 9/26**
A 01 G 9/22, E 04 F 10/10

(30) Priority: 26.02.85 JP 35319/85

(43) Date of publication of application:
03.09.86 Bulletin 86/36

(84) Designated Contracting States:
DE FR GB

(71) Applicant: KURON CORPORATION
6-12, Kanemecho 2-chome
Nagaoka-shi Niigata-ken(JP)

(72) Inventor: Tsuchida, Eiharu
596, Ohazahitozura
Tochio-shi Niigata-ken(JP)

(74) Representative: Slight, Geoffrey Charles et al,
Graham Watt & Co. Riverhead
Sevenoaks Kent TN13 2BN(GB)

(54) Overhead blind.

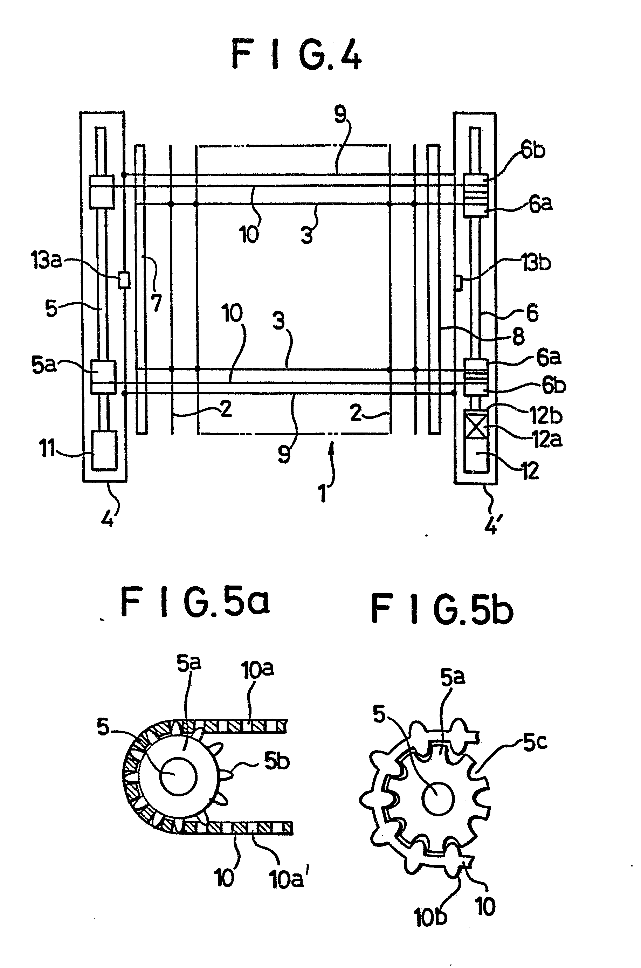

(57) An overhead blind (1) in which not only the slats (2) can be tilted, but also all of the slats can be shifted by operation of an opening-and-closing member (7) and opening-and-closing cords (10) to open and close the blind (see Figure 3). The tilting means comprises tilt cords (3) and tilt pulleys (6a). The tilting means and the opening-and-closing means can be motor driven and automatically controlled.

F I G.2

EP 0 193 391 A2

SPECIFICATION


Title of the Invention

Overhead Blind


Background of the Invention

Technical Field

The invention relates to an overhead blind to be installed on a skylight or slanted window of a building (hereinafter referred to simply as an "overhead blind").


Prior Art

Conventionally an overhead blind is installed on a skylight or slanted window of a building, but the blind of the prior art was provided with a plurality of slats which were installed between an endless cord supported rotably by wheels at both ends, and the slats were swiveled to tilt at substantially predetermined locations by the action of the endless cord. However, in this construction, the slats always remained over the whole surface of the overhead window, thereby often causing insufficient lighting even when the slats opened, a narrow field of outdoor vision through the window, and discomfort from the shadows projected by the slats into the room. Other problems included were that the slats interrupted cleaning of the glass or other operations of the skylight from inside the room, rendering cleaning difficult.

## Brief Summary of the Invention

An object of the invention is to provide an overhead blind, e.g. of the tilting slat kind, wherein all the slats can be shifted to completely open or close the whole surface of a skylight or slanted window, thereby resolving the problems mentioned above.

According to the invention, an overhead blind is provided, which, contrary to that of the prior art, can be completely opened, thereby admitting complete lighting through a skylight or slanted window, widening the field of vision through the skylight or window, permitting easy cleaning of the skylight or window, and other advantages. Further, the operation can be motorized, the opening and closing motion can be automatically stopped and the operation can be remotely controlled, thereby permitting installation of the blind in high positions such as in a warehouse without creating difficulty in handling.

## Brief Description of the Drawings

Fig. 1 is a top plan view of an embodiment of the invention.

Fig. 2 is a side elevation of the embodiment of Fig. 1,

Fig. 3 shows a view similar to Fig. 2, but in the opened condition ,

Fig. 4 is a top plan view of another embodiment of the invention, and

Fig. 5(a) and (b) are partial details showing modifications of the embodiments of the invention shown in Figs. 1 to 4.

Detailed Description of the Invention

The invention will now be described in detail, by way of example only, with reference to the drawings.

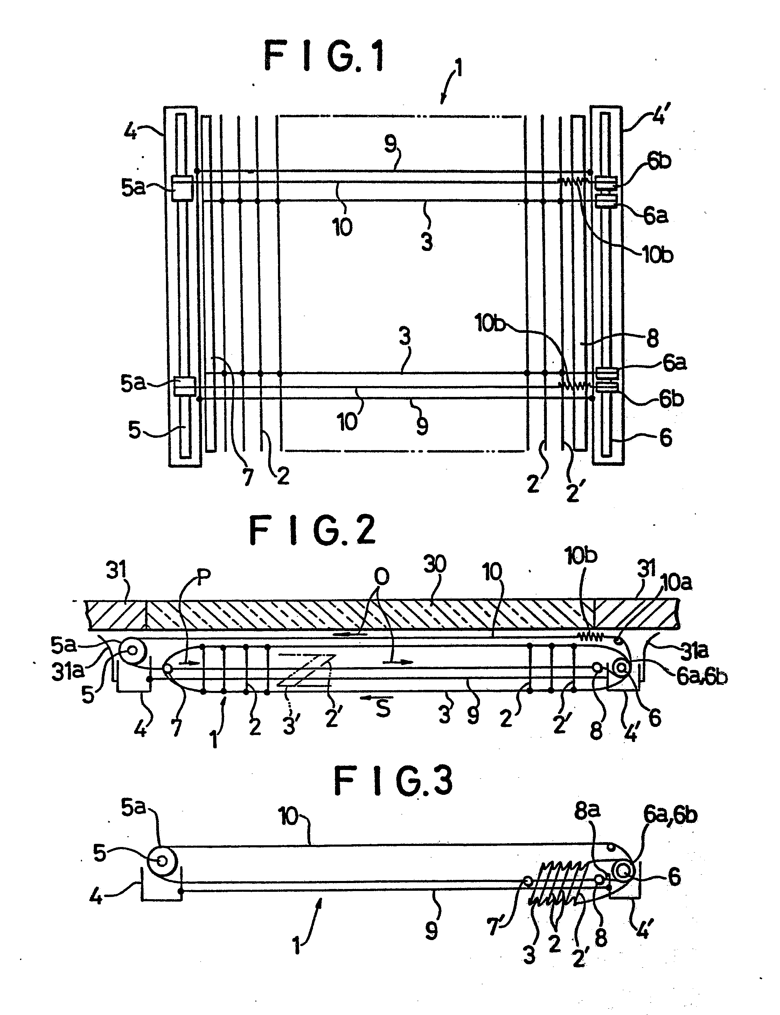

In Fig. 1 showing an embodiment of the invention, an overhead blind 1 has a plurality of endless tilt cords 3 which hold both ends of a plurality of slats 2 parallel and substantially equally spaced, the number of cords depending on the width of the blind. The relative positions of slats 2 to the tilt cords 3 are substantially fixed. Two frames 4,4' are spaced apart by the length of the skylight 30 and secured to the roof 31 through brackets 31a. In the frame 4 is disposed an opening-and-closing shaft 5, and in the frame 4' is disposed a tilt shaft 6, both shafts being turned or rotated by driving means (not shown). Along the slat 2 side of the frame 4 is disposed an opening-and-closing member 7, and along the slat 2 side of the other frame 4' is disposed an open-and-closed detecting member 8. One end of the tilt cords 3 is supported by the opening-and closing member 7, and the other end thereof is supported by a tilt pulley 6a mounted on the tilt shaft 6, so that the tilt cords 3 are moved by the rotation of the tilt shaft 6 to tilt the slats 2 at predetermined locations. Support cables 9 made of fine wire or piano wire pass through all of the slats 2 and the ends of the support cables 9 are secured to the frames 4,4'. The slats 2 are provided with enlarged openings where the support cables 9 pass through the slats 2 the openings being elongated in the direction of tilting and formed so that the slats 2 do not tightly engage the support cables 9 when the slats 2 are tilted or shifted to the open or closed position. An opening-and-closing cord 10 is made endless, and is engaged at one end by an opening-and-closing drive pulley 5a and at the other end by an opening-and-closing pulley 6b (idler) which is loosely fitted on a tilt shaft 6. The opening-and-closing cord 10 may, if necessary, be supported by a guide 10a. The opening-and-closing cord 10 and the opening-and-closing member 7 are connected to each other, for example, in such a manner that the opening-and-closing cord 10 and the opening-and-closing member 7 are caulked together after the cord 10 is passed through the member 7 and drawn to a predetermined location. The member 7 may, instead, be adjustable fastened to the cord 10 by means of a rivet or other fastener. The detecting member 8 and the opening-and-closing cord 10 are independent of the support cables 9. Usually the number of tilt cords 3, support cables 9 and opening-and-closing cords 10 provided on one blind 1 is two or more depending on the width of the blind. Tension springs 10b may be interposed in each opening-and-closing cord 10 loop in such locations that they do not interfere with the opening-and-closing pulley 5a or the opening-and-closing idler pulley 6b, whereby elongation and contraction of the opening-and-closing cord loops can be absorbed, a predetermined frictional force can be applied to the drive pulley 5a, and also variation in the length of each opening-and-closing cord 10 can be prevented.

The operation of the blind 1 will next be described. When the slats 2 are to be tilted at the predetermined locations, the tilt shaft 6 is turned manually, or by an electrical motor or other means to rotate the tilt pulleys 6a to move the tilt cords 3 in the direction of arrow S so that the slats 2 and the tilt cords 3 are each moved to the positions 2' and 3' to close the blind 1. The slats may be tilted in the opposite direction in the same way by turning the tilt shaft 6 to move the tilt cords 3 in the direction opposite the direction of arrow S.

When the slats 2 are to be shifted to completely open the skylight 30, the opening-and-closing shaft 5 is rotated manually or electrically to rotate the opening-and-closing drive pulleys 5a to move the opening-and-closing cords 10 in the direction of arrow O. The opening-and-closing member 7 is thereby moved in the direction of arrow P to push the slats 2 along the support cables 9 until the member 7 reaches the position 7' shown in Fig. 3, the blind 1 then being almost fully opened. The slats 2 are prevented from drooping since the support cables 9 pass through all of the slats 2. The detecting member 8 is used, for example, to actuate a limit switch by detecting the completion of an opening operation if done electrically. The slat 2' at the extreme end may be used as the detecting member instead of the member 8.

Fig. 4 shows another embodiment of the invention. The slats 2, tilt cords 3, frames 4,4', opening-and-closing shaft 6, tilt pulleys 6a, opening-and-closing idler pulleys 6b, opening-and-closing member 7, detecting member 8, support cables 9 and opening-and-closing cords 10 are similar to those shown in Figs. 1 and 2.

In the embodiment of blind 1' shown in Fig. 4, an opening-and-closing motor 11 is installed on the frame 4 to drive the opening-and-closing shaft 5. Also a tilt motor 12 and tilt limit switch 12a are installed on the frame 4' to actuate turning and stopping of the tilt shaft 6. An opening-and-closing end detector 13a is installed on the frame 4, and an opening-and-closing end detector 13b is installed on the frame 4'. An actuating element 12b is attached to the tilt shaft 6 to actuate the limit switch 12a in the predetermined open and closed positions of the slats 2.

The operation of blind 1' will now be described. When a command to drive the tilt motor 12 in either direction is supplied, the tilt motor 12 turns with the actuating element 12b to swivel and the slats 2 through the tilt spring 3 until the slats 2 reach either tilting extremity at the predetermined locations and the limit switch 12a is actuated through the actuating element 12b to stop the motor 12. If the driving command is terminated partway through the tilting, tilting stops at any desired angular position.

When an opening signal is supplied when blind 1' is closed, the opening-and-closing motor 11 rotates in the opening direction to push and stack up the slats 2 through the opening-and-closing member 7 until the slats 2 finish stacking and move the detecting member 8 (to the right in the drawing) to stop the motor 11 by the interaction of the detecting member 8 and the opening-and-closing detector 13b. When the blind 1' is to be closed, the detecting member 8 is moved in the opposite direction by a returning element 8a (Fig. 3) and the opening-and-closing member 7 actuates the opening-and-closing detector 13a to stop the motor 11.

Operating commands can be sent to the tilt motor 12 and the opening-and-closing motor 11 from a control console which is connected directly to the blind through signal wires. Also remote control signals can be sent separately, for instance, by means described in Patent Application No. 59-60719/1984 or No. 59-60720/1984 filed by the applicant of the present invention. The remote control, if used, makes the handling of blinds which are installed on skylights at elevated locations particularly easy.

If magnetic sensors are used for the opening-and-closing detectors 13a, 13b and magnets are installed on the opening-and-closing member 7 and the detecting member 8 to actuate the magnetic sensors, the device becomes more compact.

When the blind 1,1' is operated by the opening-and-closing member 7 through the opening-and-closing cords 10 driven by the opening-and-closing drive pulleys 5a, the frictional force between the cords 10 and the pulleys 5a may sometimes be insufficient to move the cords depending on the weight of the slats. In such a case, the movement of the opening-and-closing cords 10 and hence the opening-and-closing member 7 can be ensured by providing projections 5b and holes 10a', or concave tooth gaps 5c and teeth 10b, on the pulleys 5a and the cords 10, respectively. Alternatively, projections 5b on the pulleys 5a may be pointed to penetrate the cords 10 which then have a net or similar construction to permit the penetration of the projections. In case the blind is driven by an electric motor, a transformer is used as the power source means. If the transformer capacity is divided into a plurality of transformers of smaller capacity, the size of each transformer can be made small enough to be installed on the frames 4,4', thereby reducing the size of the frames to improve their esthetic appearance.

CLAIMS:

1. An overhead blind composed of slats characterized by means for shifting the slats to open and close the blind.

2. An overhead blind as claimed in claim 1 including means for tilting the slats.

3. An overhead blind as claimed in claim 2 further including tilt control means for said slats, opening-and-closing control means for said slats, and signal receiving means for said control means whereby said tilt control means and said opening-and-closing control means may be independently and remotely controlled by separate transmitters.

4. An overhead blind as claimed in claim 2 or 3 in which the slat tilting means includes a tilt cord which supports said slats at both edges thereof so that the slats lie parallel to one another and at substantially equal distances from one another and tilt drive means for moving one end of said tilt cord to tilt the slats.

5. An overhead blind as claimed in any preceding claim further including a support cable passing through said slats and preventing said slats from drooping.

6. An overhead blind as claimed in any preceding claim, said shifting means comprising an opening-and-closing member which supports the other end of said tilt cord in such a manner as to permit said tilt cord to move and an opening-and-closing cord which is connected to said opening-and-closing member and supports at one side in such a manner as to be free to move and at the other side by opening-and-closing drive means so as to be capable of being drivingly moved.

7. An overhead blind as claimed in claim 4, further including a motor for driving said tilt drive means, a motor for driving said opening-and-closing drive means, a tilt position detecting device, and an open-and-closed position detecting device, said tilting and said shifting of said slats being stopped at each terminal point by said tilt position and said open-and-closed position detecting devices.

8. An overhead blind as claimed in claim 7 in which said opening-and-closing cord engages said opening-and-closing drive means by means of irregularities formed on both.

9. An overhead blind as claimed in claim 7 or 8 in which said opening-and-closing cord is supported at said one side by an idler pulley and further supported by a guide.

10. An overhead blind as claimed in claim 7, 8 or 9 in which said opening-and-closing cord is connected with a tension spring.

11. An overhead blind as claimed in any one of claims 7 to 10 in which said open-and-closed position detecting device comprises a magnet provided on said opening-and-closing member and a magnetic detecting sensor provided on a frame body of the blind.

12. An overhead blind as claimed in any one of claims 7 to 11 in which a transformer as a power source means is divided into a plurality of units which are disposed in a frame body containing said tilt drive means and said opening-and-closing driving means.

# F I G.1

# F I G.2

# F I G.3

# F I G.4

# F I G.5a

# F I G.5b